# FASCICULE DE BREVET EUROPEEN

(11) **EP 3 042 105 B1**
(45) Date de publication et mention de la délivrance du brevet: **20.12.2017**
(21) Numéro de dépôt: 14777703.1
(22) Date de dépôt: 04.09.2014
(51) Int. Cl.: F16H 57/04

(54) **ENSEMBLE ROTATIF COMPRENANT UN ORGANE DE TRANSMISSION ET UN SYSTEME DE DISTRIBUTION D'HUILE**
ROTORBAUGRUPPE MIT EINEM GETRIEBEELEMENT UND ÖLVERTEILSYSTEM
ROTATING ASSEMBLY COMPRISING A TRANSMISSION MEMBER AND AN OIL DISTRIBUTION SYSTEM

(30) Priorité: 06.09.2013 FR 1358581
(43) Date de publication de la demande: 13.07.2016
(73) Titulaire: SNECMA, 75015 Paris (FR)
(72) Inventeur: BRAULT, Michel, Gilbert, Roland, F-77550 Moissy-Cramayel Cedex (FR); LEMARCHAND, Kévin, F-77550 Moissy-Cramayel Cedex (FR)
(74) Mandataire: Joanny, Damien Henri Xavier
(86) Numéro de dépôt international: PCT/FR2014/052183
(87) Numéro de publication internationale: WO 2015/033066

(56) Documents cités:
- FR-A1- 2 431 028
- US-A1- 2013 225 353
- US-B1- 6 223 616

## Description

### DOMAINE DE L'INVENTION

Le présent exposé concerne un ensemble rotatif comprenant un organe de transmission et un système de distribution d'huile permettant de fournir de l'huile à l'organe de transmission afin d'assurer sa lubrification.

Un tel ensemble rotatif peut notamment être utilisé dans le domaine aéronautique, au sein de turboréacteurs d'avions ou de turbomoteurs d'hélicoptères pour ne citer que ces exemples.

### ETAT DE LA TECHNIQUE ANTERIEURE

Les turboréacteurs classiquement rencontrés aujourd'hui dans le domaine de l'aviation civile sont des turboréacteurs double corps à double flux. Toutefois, en raison des contraintes toujours plus importantes sur les coûts d'exploitation, étroitement liés au coût des carburants, aujourd'hui très élevé, de nouveaux projets de turboréacteurs bénéficiant d'une plus faible consommation spécifique ont été proposés.

Une option prometteuse consiste à équiper le turboréacteur d'un réducteur de vitesse intercalé entre le compresseur basse-pression et la soufflante : de cette manière, il est possible d'augmenter la vitesse de rotation du corps basse-pression, augmentant ainsi le rendement global du turboréacteur, tout en réduisant la vitesse de la soufflante, ce qui réduit les perturbations aérodynamiques en bout de pale et contribue ainsi à réduire le bruit généré par la soufflante.

Le turboréacteur à réducteur présente donc d'importantes qualités mais il pose encore aujourd'hui quelques difficultés qui devront être surmontée avant le lancement de son industrialisation.

En particulier, ce réducteur doit être lubrifié et refroidi pour assurer son fonctionnement correct sans être endommagé. Dans un réducteur classique, ces fonctions sont traditionnellement assurées par une circulation d'huile alimentée par centrifugation ; toutefois, il a été constaté que la pression d'huile n'était pas suffisante dans ces configurations de turboréacteur à réducteur pour assurer une alimentation par centrifugation efficace.

Une autre solution proposée consiste à transférer l'huile entre le carter et le réducteur à l'aide d'un palier de transfert d'huile monté sur le réducteur. Toutefois, cette solution n'est pas non plus satisfaisante car le fonctionnement du palier de transfert d'huile est fortement perturbé par les déplacements et les désaxements erratiques du réducteur causés par les nombreuses vibrations auquel il est soumis : on constate en particulier des usures prématurées du palier de transfert d'huile affectant l'alimentation en huile et donc la durée de vie du réducteur.

On connait également les documents US 6 223 616 et US 2013/0225353 qui décrivent d'autres système de distribution d'huile pour des organes de transmission.

Il existe donc un réel besoin pour un ensemble rotatif comprenant un organe de transmission et un système de distribution d'huile qui soit dépourvu, au moins en partie, des inconvénients inhérents aux configurations connues précitées.

### PRESENTATION DE L'INVENTION

Le présent exposé concerne un ensemble rotatif comprenant un organe de transmission et un système de distribution d'huile, dans lequel le système de distribution d'huile comprend au moins une chambre de transfert d'huile munie d'au moins un orifice d'alimentation configuré pour recevoir de l'huile depuis l'extérieur de l'ensemble rotatif ; l'organe de transmission comprend au moins une partie tournante munie d'au moins une chambre de réception d'huile ; au moins un conduit de liaison connecte fluidiquement la chambre de transfert d'huile et la chambre de réception d'huile ; le système de distribution d'huile est entrainé solidairement en rotation par ladite partie tournante de l'organe de transmission ; et l'ensemble rotatif est configuré de manière à permettre un déplacement relatif axial et/ou radial donné entre ladite partie tournante de l'organe de transmission et le système de distribution d'huile.

Dans le présent exposé, on entend par « le système de distribution d'huile est entrainé solidairement en rotation par ladite partie tournante de l'organe de transmission» le fait que le système de distribution d'huile tourne sensiblement à la même vitesse, et en tout état de cause en moyenne à la même vitesse, que la partie tournante de l'organe de transmission avec un déphasage restant sensiblement nul, et en tout état de cause nul en moyenne, de telle sorte qu'un point donné du système de distribution d'huile fasse toujours sensiblement face à la même zone de la partie tournante de l'organe de transmission. Cette définition tolère donc de petites différences de vitesse transitoires ou de petits déphasages transitoires dues à des vibrations parasites ou en cas d'accélération ou de décélération de la partie tournante de l'organe de transmission par exemple.

En outre, on entend par « déplacement relatif axial et/ou radial donné » un déplacement relatif d'une amplitude dépassant celle résultant de simples jeux habituels de fixation : il s'agit bien d'offrir une liberté de mouvement supérieure à de tels jeux conventionnels.

Dès lors, l'orifice de la chambre de réception d'huile fait toujours sensiblement face à un même orifice de la chambre de transfert d'huile, ce qui permet la mise en place du conduit de liaison et donc la distribution d'huile depuis le système de distribution d'huile vers la partie tournante de l'organe de transmission.

D'autre part, grâce à cette configuration, à l'exclusion de l'entraînement en rotation, les mouvements de l'organe de transmission et du système de distribution d'huile, au moins dans une plage d'amplitude donnée, sont découplés : la partie tournante de l'organe de transmission peut ainsi subir certains déplacements ou désaxements erratiques causés par les vibrations de l'organe de transmission, leur propagation au système de distribution d'huile étant réduite voire totalement évitée. La position et l'alignement de ce dernier vis-à-vis de l'extérieur de l'ensemble rotatif n'est donc pas ou peu perturbée durant sa rotation, ce qui assure une alimentation correcte du système de distribution d'huile depuis l'extérieur et une réduction des fuites d'huile à cette interface.

En particulier, on limite ainsi le risque que le système de distribution d'huile, suivant les mouvements erratiques de l'organe de transmission, n'entre en collision avec certains organes extérieurs à l'ensemble rotatif, un carter par exemple, ou ne frottent sur ces derniers : dès lors, l'efficacité de l'ensemble rotatif est préservée et son usure est réduite, ce qui augmente sa durée de vie.

Dans le présent exposé, les termes « axial », « radial », « tangentiel », « intérieur », « extérieur » et leurs dérivés sont définis par rapport à l'axe principal de l'ensemble rotatif.

Dans certains modes de réalisation, le système de distribution d'huile est configuré pour être calé radialement dans un carter, et l'organe de transmission est monté flottant dans ce carter, l'ensemble étant configuré de manière à ce que le système de distribution d'huile conserve sensiblement son alignement dans le carter quels que soient les déplacements axiaux et/ou radiaux de l'organe de transmission. Par « alignement », on entend à la fois la direction et la position de son axe principal. Le système de distribution d'huile est donc centré sur le carter et non sur l'organe de transmission : les mouvements parasites axiaux et/ou radiaux de l'organe de transmission étant découplés du mouvement de rotation du système de distribution d'huile, ce dernier peut rester aligné dans la partie de carter dans laquelle il est calé. A l'exception de son mouvement de rotation, la position et l'orientation de l'interface entre le système de distribution d'huile et le carter est ainsi stable dans le temps, ce qui assure la fiabilité de l'alimentation en huile et la durabilité du système de distribution d'huile.

Dans certains modes de réalisation, le conduit de liaison est monté flottant entre, d'une part, des surfaces de contact du système de distribution d'huile et, d'autre part, des surfaces de contact de la partie tournante de l'organe de transmission. Grâce à ce montage flottant, le conduit de liaison peut suivre les éventuels petits mouvements parasites de la partie tournante de l'organe de transmission sans que son désalignement éventuel ne perturbe l'alignement du système de distribution d'huile.

Dans certains modes de réalisation, un joint torique s'interpose entre le conduit de liaison et lesdites surfaces de contact du système de distribution d'huile.

Dans certains modes de réalisation, un joint torique s'interpose entre le conduit de liaison et lesdites surfaces de contact de la partie tournante de l'organe de transmission. Ces joints toriques permettent d'amortir et de compenser d'autant mieux les déplacements relatifs de la partie tournante de l'organe de transmission et du système de distribution d'huile. Ils permettent également d'assure l'étanchéité entre le conduit de liaison et lesdites surfaces de contact.

Dans certains modes de réalisation, le système de distribution d'huile est connecté à la partie tournante de l'organe de transmission à l'aide d'au moins un dispositif d'entraînement en rotation comprenant un amortisseur. Ce dispositif d'entraînement en rotation muni de cet amortisseur permet d'entraîner le système de distribution d'huile en rotation en limitant la transmission des mouvements parasites de l'organe de transmission au système de distribution d'huile.

Dans certains modes de réalisation, le système de distribution d'huile est connecté à la partie tournante de l'organe de transmission à l'aide d'une pluralité de dispositifs d'entraînement en rotation régulièrement disposés autour de l'axe du système de distribution d'huile. De cette manière, les différents dispositifs d'entraînement en rotation peuvent coopérer pour reprendre également les petites variations d'axe parasites de la partie tournante de l'organe de transmission sans les transmettre au système de distribution d'huile. De préférence, l'ensemble rotatif comprend cinq dispositifs d'entraînement en rotation de ce type.

Dans certains modes de réalisation, le dispositif d'entraînement en rotation comprend une protrusion d'entraînement solidaire d'une paroi de l'un des deux éléments constitués par la partie tournante de l'organe de transmission et le système de distribution d'huile, ladite protrusion étant engagée dans une ouverture d'entraînement d'une paroi de l'autre desdits éléments, et un amortisseur est interposé entre ladite protrusion d'entraînement et ladite ouverture d'entraînement.

Dans certains modes de réalisation, la protrusion d'entraînement est une vis fixée dans ladite paroi dudit élément.

Dans certains modes de réalisation, la protrusion d'entraînement est portée par une paroi de la partie tournante de l'organe de transmission et l'ouverture d'entraînement est pratiquée dans une paroi du système de distribution d'huile.

Dans certains modes de réalisation, l'amortisseur peut se déformer axialement et radialement.

Dans certains modes de réalisation, l'amortisseur comprend une bague intérieure, en contact avec la protrusion d'entraînement, une bague extérieure, montée dans ladite ouverture d'entraînement, et un corps intermédiaire souple axialement et radialement. Cette configuration offre ainsi un rattrapage des mouvements parasites de la partie tournante de l'organe de transmission dans toutes les directions. Il s'agit en outre d'un système statique, les déplacements relatifs étant compensés par l'élasticité de l'amortisseur.

Dans certains modes de réalisation, l'amortisseur possède une symétrie axiale.

Dans certains modes de réalisation, le corps intermédiaire souple est en un matériau élastomère, notamment en nitrile ou en silicone.

Dans certains modes de réalisation, le corps intermédiaire souple est collé sur les bagues intérieure et extérieure.

Dans certains modes de réalisation, la bague intérieure et/ou la bague extérieure sont métalliques.

Dans certains modes de réalisation, la bague extérieure est frettée dans l'ouverture d'entraînement.

Dans d'autres modes de réalisation, le dispositif d'entraînement en rotation comprend une protrusion d'entraînement solidaire d'une paroi de l'un des deux éléments constitués par la partie tournante de l'organe de transmission et le système de distribution d'huile, et une entretoise prévue autour de la protrusion d'entraînement, ladite entretoise étant engagée dans une ouverture d'entraînement d'une paroi de l'autre desdits éléments ; un amortisseur est prévu entre ladite protrusion d'entraînement et l'entretoise. L'entretoise permet de définir des jeux précis avec l'ouverture d'entraînement de manière à régler précisément les déplacements relatifs axial et/ou radial autorisés entre la partie tournante de l'organe de transmission et le système de distribution d'huile.

Dans certains modes de réalisation, l'amortisseur est un joint torique.

Dans certains modes de réalisation, la protrusion d'entraînement est portée par une paroi de la partie tournante de l'organe de transmission et l'ouverture d'entraînement est pratiquée dans une bride d'entraînement du système de distribution d'huile.

Dans certains modes de réalisation, le dispositif d'entraînement en rotation est configuré pour permettre un déplacement axial donné de l'entretoise.

Dans certains modes de réalisation, le dispositif d'entraînement en rotation est configuré de manière à laisser un jeu axial inférieur à 1mm, de préférence inférieur à 0,5 mm, de préférence encore environ égal à 0,2 mm, entre la face avant de l'entretoise et la surface de la partie tournante.

Dans certains modes de réalisation, l'entretoise comprend en outre une collerette s'étendant à l'arrière de l'ouverture d'entraînement, son diamètre étant supérieur à la largeur de l'ouverture d'entraînement ; le dispositif d'entraînement en rotation est configuré de manière à laisser un jeu axial inférieur à 5 mm, de préférence inférieur à 2 mm, de préférence encore environ égal à 1 mm, entre la collerette de l'entretoise et la surface arrière de la bride d'entraînement du système de distribution en huile.

Dans certains modes de réalisation, le dispositif d'entraînement est configuré de manière à laisser un jeu radial inférieur à 1 mm, de préférence inférieur à 0,6 mm, de préférence encore environ égal à 0,4 mm, entre l'entretoise et la protrusion d'entraînement.

Dans certains modes de réalisation, l'ouverture d'entraînement est une ouverture oblongue dont les côtés comportent une portion rectiligne ; l'entretoise comprend des méplats configurés pour coopérer avec les portions rectilignes de l'ouverture d'entraînement, l'entretoise pouvant se déplacer axialement et radialement au sein de l'ouverture d'entraînement.

Dans certains modes de réalisation, le dispositif d'entraînement est configuré de manière à laisser un jeu latéral inférieur à 0,5 mm, de préférence inférieur à 0,2 mm, de préférence encore environ égal à 0,12 mm, entre les méplats de l'entretoise et les portions rectilignes de l'ouverture d'entraînement.

Dans certains modes de réalisation, l'entretoise peut se déplacer au sein de l'ouverture d'entraînement sur une longueur supérieure à 0,2 mm, de préférence environ égale à 0,5 mm.

Dans certains modes de réalisation, la chambre de transfert d'huile est annulaire et continue sur 360°.

Dans d'autres modes de réalisation, la chambre de transfert d'huile du système de distribution d'huile s'étend sur un secteur angulaire strictement inférieur à 360°. De cette manière, la chambre de transfert d'huile n'est pas continue sur le tour complet du système de distribution d'huile, ce qui empêche l'huile de tourner au sein de la chambre de transfert d'huile et limite ainsi l'impact des mouvements de l'huile sur la dynamique d'ensemble du système de distribution d'huile. De cette manière, l'huile se situe dans le même repère que le système de distribution.

Dans certains modes de réalisation, l'organe de transmission est un réducteur de vitesse.

Dans certains modes de réalisation, l'organe de transmission est un train épicycloïdal.

Dans certains modes de réalisation, ladite partie tournante de l'organe de transmission est un porte-satellites.

Dans certains modes de réalisation, ledit porte-satellites possède une pluralité de fusées portant chacune un pignon satellite, chaque fusée étant munie d'une chambre de réception d'huile configurée pour lubrifier le palier de ce pignon satellite et chaque chambre de réception d'huile étant connecté fluidiquement à la chambre de transfert d'huile du système de distribution d'huile par un conduit de liaison.

Le présent exposé concerne en outre une turbomachine comprenant un ensemble rotatif selon l'un quelconque des modes de réalisation précédents, le système de distribution d'huile de cet ensemble étant logé dans un carter muni d'une chambre d'alimentation en huile.

Dans certains modes de réalisation, le carter comprend une cavité annulaire de sortie d'huile ouverte à 360° en direction du système de distribution d'huile et connectée fluidiquement à la chambre d'alimentation en huile ; le système de distribution d'huile comprend une cavité annulaire d'entrée d'huile ouverte à 360° en vis-à-vis de la cavité de sortie d'huile du carter et connectée fluidiquement à la chambre de transfert d'huile par l'intermédiaire dudit au moins un orifice d'alimentation. Grâce à cet ensemble rotatif dont le système de distribution d'huile reste aligné au sein du carter malgré les mouvements parasites de l'organe de transmission, les cavités annulaires de sortie et d'entrée d'huile restent alignées en vis-à-vis dans le même plan malgré la rotation du système de distribution d'huile et les mouvements parasite de l'organe de transmission : l'alimentation en huile du système de distribution d'huile tournant depuis le carter fixe peut ainsi être réalisée de manière fiable. Les fuites d'huile à cette interface sont en outre limitées.

Dans certains modes de réalisation, la cavité d'entrée d'huile du système de distribution d'huile est encadrée de part et d'autre par un segment d'étanchéité.

Dans certains modes de réalisation, les fuites d'huile à l'interface entre le système de distribution d'huile et le carter maintiennent un film d'huile. Les segments d'étanchéité sont en effet dimensionnés de telle sorte que la pression de l'huile permet à l'huile de dépasser les segments d'étanchéité de manière à initier le film d'huile. Ce film d'huile permet de lubrifier l'interface entre le système de distribution d'huile et le carter afin de permettre sa bonne rotation. De préférence, le carter entourant le système de distribution et l'organe de transmission forme une enceinte fermée permettant de récupérer l'huile et d'éviter qu'elle ne pollue ou qu'elle soit polluée par d'autres éléments de la turbomachine.

Les caractéristiques et avantages précités, ainsi que d'autres, apparaîtront à la lecture de la description détaillée d'exemples de réalisation de l'ensemble rotatif proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'éléments) appartenant à des exemples de réalisation différents mais ayant une fonction analogue sont repérés sur les figures par des références numériques incrémentées de 100, 200, etc.
La FIG 1 est une vue en coupe axiale d'un exemple de turbomachine à réducteur.
La FIG 2 est une vue partielle en coupe d'un premier exemple de système de distribution d'huile et de son environnement.
Les FIG 3A et 3B sont des vues en perspective, de face et de dos, du premier exemple de système de distribution d'huile.
La FIG 4 est une vue en perspective et en coupe d'une partie du premier exemple de système de distribution d'huile.
La FIG 5 est une vue en perspective d'une partie d'un deuxième exemple de système de distribution d'huile.
La FIG 6A est une vue de face du dispositif d'entraînement en rotation du système distribution d'huile de la FIG 5.
La FIG 6B est une vue en coupe du dispositif d'entraînement en rotation du système de distribution d'huile de la FIG 5.

### DESCRIPTION DETAILLEE D'EXEMPLES DE REALISATION

Afin de rendre plus concrète l'invention, des exemples d'ensembles rotatifs sont décrits en détail ci-après, en référence aux dessins annexés. Il est rappelé que l'invention ne se limite pas à ces exemples.

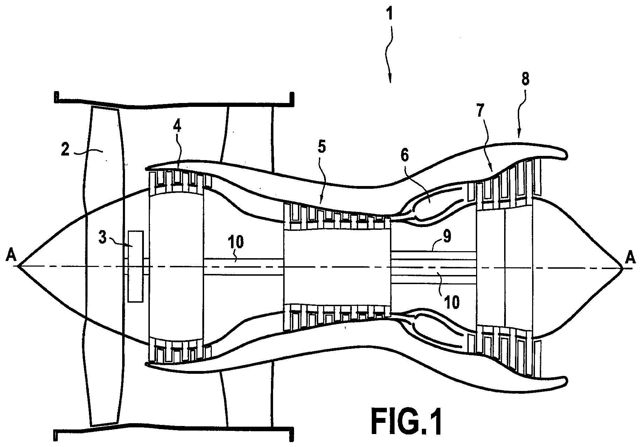

La FIG 1 représente, en coupe selon un plan vertical passant par son axe principal A, un turboréacteur 1 à double flux à réducteur selon l'invention. Il comporte, d'amont en aval, une soufflante 2, un réducteur 3, un compresseur basse pression 4, un compresseur haute pression 5, une chambre de combustion 6, une turbine haute pression 7 et une turbine basse pression 8.

Dans un tel turboréacteur à réducteur 1, la turbine haute pression 7 entraîne le compresseur haute pression 5 à l'aide d'un arbre haute pression 9. La turbine basse pression 8, également appelée turbine rapide, entraîne quant à elle le compresseur basse pression 4, également appelé compresseur rapide, à l'aide d'un arbre basse pression 10. La turbine rapide 8 entraîne également la soufflante 2 par l'intermédiaire du réducteur de vitesse 3. De cette manière, la soufflante 2 peut être entraînée à vitesse réduite, ce qui est favorable du point de vue aérodynamique, tandis que le compresseur basse pression 4 peut être entraîné à vitesse plus importante, ce qui est favorable d'un point de vue thermodynamique.

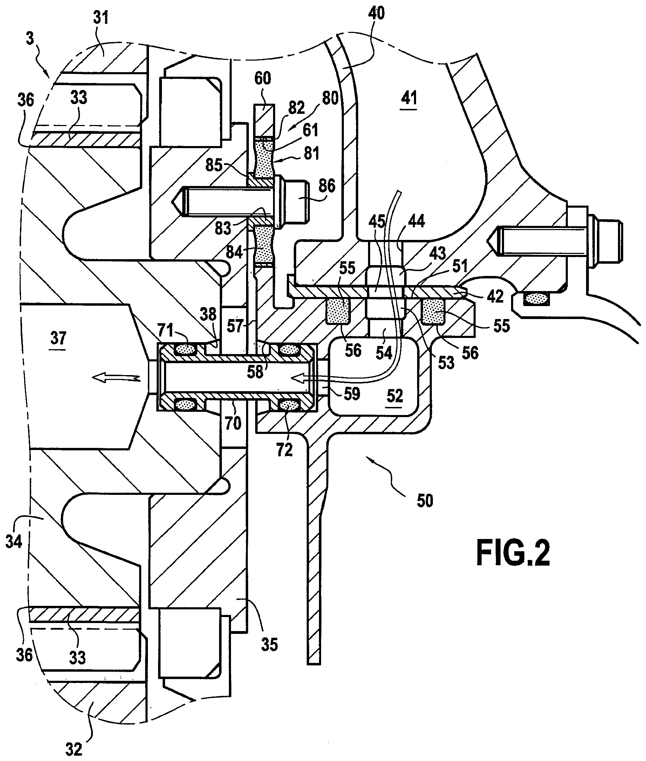

Ce réducteur 3 est visible partiellement sur la FIG 2 : il s'agit d'un train épicycloïdal muni d'une couronne 31, d'un pignon solaire 32, et de pignons satellites 33. Les pignons satellites 33 sont montés en rotation sur des fusées 34 d'un porte-satellite 35. Les paliers 36 entre les pignons satellites 33 et leurs fusées respectives 34 peuvent être lisses, comme dans cet exemple, ou peuvent comprendre un mécanisme de roulement, par exemple à rouleaux. Dans cet exemple, le porte-satellite 35 entraine la soufflante 2 tandis que le pignon solaire est entrainé par l'arbre basse pression 10.

Le réducteur 3 est monté flottant dans un carter 40 : en raison notamment des vibrations subies par le réducteur 3, ce dernier peut se déplacer au sein du carter 40 de quelques millimètres axialement ou radialement autour de sa position nominale. En raison de ces mouvements parasites, l'axe du réducteur 3 peut également dévier de quelques degrés par rapport à son axe d'alignement nominal dans le carter 40.

Afin de limiter les frottements des pignons satellites 33 sur leurs fusées 34, les paliers 36 doivent être lubrifiés : une lubrification par huile est donc prévue. Cette circulation d'huile permet en outre de refroidir les paliers 36. Pour permettre cette lubrification, les fusées 34 des pignons satellites 33 comportent chacune une chambre de réception d'huile 37 connectée fluidiquement au palier 36 par des canaux (non représenté) traversant la fusée 34. Le carter 40 comprend quant à lui une chambre d'alimentation en huile 41. Le transfert d'huile entre la chambre d'alimentation en huile 41 du carter 40 et les différentes chambres de réception d'huile 37 des fusées 34 du porte-satellites 35 est assurée à l'aide d'un système de distribution d'huile 50.

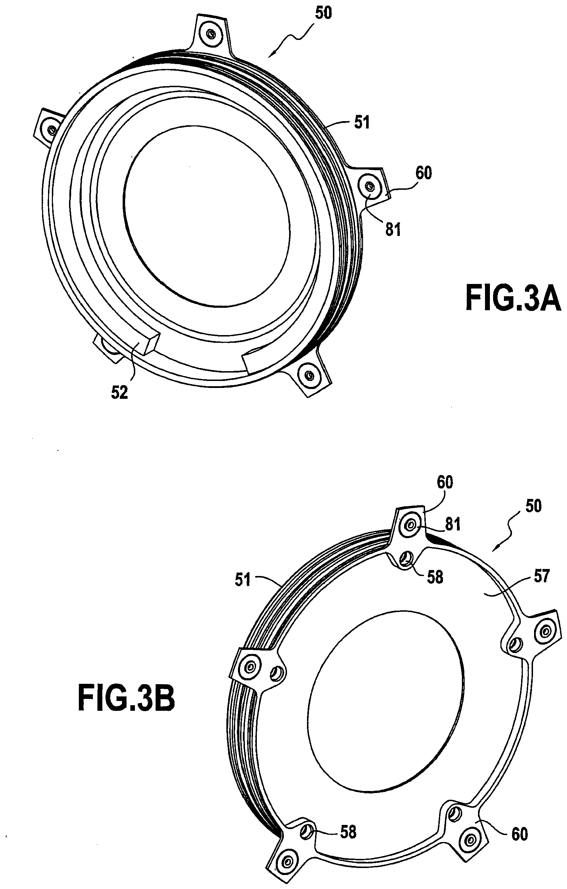

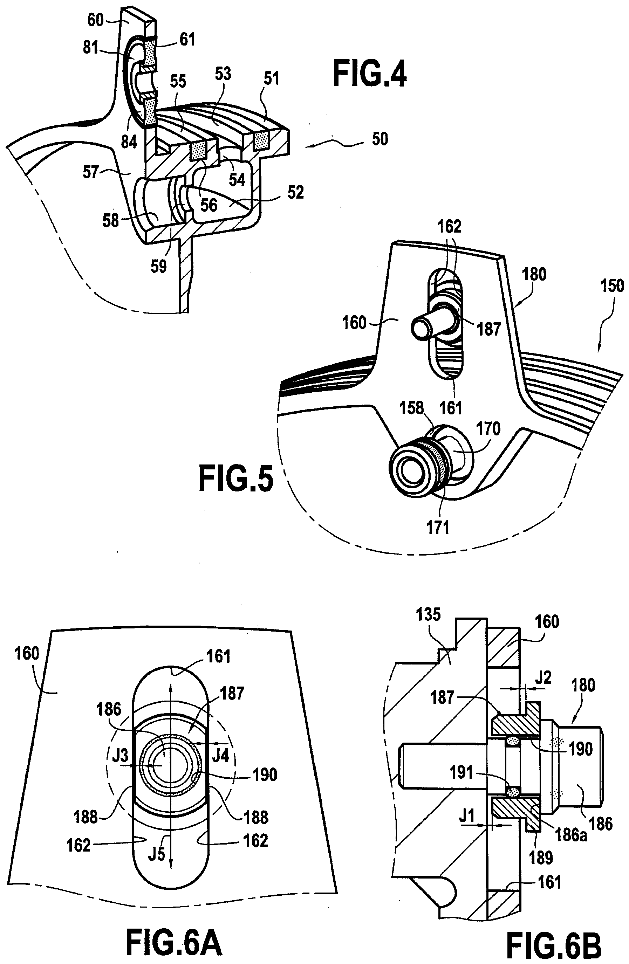

Ce système de distribution d'huile 50, mieux visible sur les FIG 3A, 3B et 4, est une pièce de forme générale annulaire munie d'une paroi extérieure cylindrique 51 et comprenant une chambre de transfert d'huile 52 s'étendant en arc de cercle à l'intérieur et le long de la quasi-totalité de la paroi extérieure 51. Dans cet exemple de réalisation, le train épicycloïdal comprend cinq pignons satellites 33 : il est donc avantageux que la chambre de transfert d'huile s'étende sur un peu plus de 4/5 de tour pour pouvoir alimenter les 5 fusées 34 du porte-satellites 35.

Le système de distribution d'huile 50 est monté dans le carter 40 en engageant sa paroi extérieure cylindrique 51 dans une frette cylindrique 42 du carter 40.

Afin de transférer l'huile depuis la chambre d'alimentation en huile 41 vers la chambre de transfert d'huile 52, le carter 40 comprend, au dos de la frette 42, une cavité annulaire de sortie d'huile 43 s'étendant à 360° le long de la frette 42 et connecté fluidiquement à la chambre d'alimentation en huile 41 par l'intermédiaire d'un orifice 44.

Le système de distribution d'huile 50 comprend quant à lui une cavité annulaire d'entrée d'huile 53 ouverte à 360° dans la paroi extérieure cylindrique 51 et connectée fluidiquement à la chambre de transfert d'huile 52 par l'intermédiaire d'orifices d'alimentation 54.

Ces cavités annulaire de sortie et d'entrée d'huile 43, 53 sont disposés de telle sorte qu'elles se font face lorsque le système de distribution d'huile 50 est monté dans le carter 40, la frette 42 étant munie d'orifices de passage 45 au niveau de la cavité de sortie d'huile 43. Dans cet exemple, la frette 42 est munie d'au moins une dizaine d'orifices de passage 45. Le système de distribution d'huile 50 comprend en outre deux joints d'étanchéité annulaires 55 disposés dans des rainures annulaires 56 pratiquées dans la paroi extérieure cylindrique 51 de part et d'autre de la cavité annulaire d'entrée d'huile 53. Les joints d'étanchéité 55 sont dimensionnés de telle sorte qu'un faible débit de fuite d'huile reste possible de manière à maintenir un film d'huile à l'interface entre le système de distribution d'huile et le carter 40. Le carter entourant le système de distribution et l'organe de transmission forme une enceinte fermée permettant de récupérer l'huile et d'éviter qu'elle ne pollue ou qu'elle soit polluée par d'autres éléments de la turbomachine.

Afin de transférer l'huile depuis la chambre de transfert 52 vers les chambres de réception d'huile 37 des fusées 34, la paroi avant 57 du système de distribution d'huile 50 comprend des renfoncements 58 prévus à des emplacements faisant face aux fusées 34 du porte-satellites 35 : dans cet exemple, le système de distribution d'huile 50 comprend donc cinq renfoncements 58 régulièrement espacés. Ces renfoncements 58 communiquent chacun fluidiquement avec la chambre de transfert d'huile 52 à l'aide d'orifices 59.

Chaque fusée 34 du porte-satellites 35 comprend quant à elle un renfoncement 38 communiquant fluidiquement avec la chambre de réception d'huile 37.

Pour chaque fusée 34, un conduit de liaison 70 est monté flottant, d'une part, entre les parois latérales du renfoncement 38 de la fusée 34 et, d'autre part, entre les parois latérales du renfoncement 58 du système de distribution d'huile 50 situé en vis-à-vis, permettant ainsi de connecter filuidiquement la chambre de réception d'huile 37 de cette fusée 34 à la chambre de distribution d'huile 52. Le conduit de liaison 70 comprend en outre des joints toriques avant 71 et arrière 72 assurant l'étanchéité entre le conduit de liaison 70 et les parois latérales des renfoncements 38 et 58, respectivement. Les joints toriques assurent également un certain amortissement et créent des liaisons linéaires annulaires afin d'absorber les dispersions radiales et angulaires entre le système de distribution d'huile et la chambre de réception d'huile.

Ainsi, lors de l'alimentation en huile, l'huile quitte la chambre d'alimentation en huile 41 du carter 40 pour remplir la cavité annulaire de sortie 43 à travers l'orifice 44 ; l'huile se déverse alors dans l'ensemble de la cavité annulaire de sortie 43 et passe à travers les passages 45 de la frette pour remplir à son tour la cavité d'entrée 53 du système de distribution d'huile 50 puis entrer dans la chambre de transfert d'huile 52 par les orifices d'admission 54 ; l'huile peut alors être distribuée par l'intermédiaire des conduits de liaison 70 aux chambres de réception d'huile 37 des fusées 34 à partir desquelles elle sera acheminée jusqu'aux paliers 36.

Afin de permettre l'entraînement en rotation du système de distribution d'huile 50 solidairement avec le porte-satellites 35 du réducteur 3 tout en limitant les contraintes exercées sur les conduits de liaison 70, l'ensemble rotatif composé du réducteur 3 et de son système de distribution d'huile 50 comprend en outre un dispositif d'entraînement en rotation 80. De préférence, comme c'est le cas dans cet exemple, l'ensemble rotatif comprend autant de dispositifs d'entraînement en rotation 80 que de fusées 34, chaque dispositif d'entraînement en rotation 80 étant localisé à proximité d'un conduit de liaison 70.

Plus précisément, le système de distribution d'huile 50 comprend des brides d'entraînement 60 s'étendant radialement vers l'extérieur depuis la paroi avant 57 du système de distribution d'huile 50 au niveau des renfoncements 58. Chaque bride d'entraînement 60 est percée d'une ouverture d'entraînement 61 circulaire dans lequel s'engage le dispositif d'entraînement en rotation 80.

Dans cet exemple, les dispositifs d'entraînement en rotation 80 sont situés à proximité des conduits de liaison 70 et sur les mêmes diamètres que ces derniers. Toutefois, en fonction de la forme du système de distribution d'huile, d'autres configurations sont possible. En particulier, il pourrait également être intéressant que chaque dispositif d'entraînement en rotation soit localisé entre deux satellites. Ils peuvent également être prévus plus proches du centre du système de distribution d'huile pour réduire l'encombrement du système.

Le dispositif d'entraînement en rotation 80 comprend un amortisseur 81 comportant une bague extérieure métallique 82, une bague intérieure métallique 83 et un corps intermédiaire souple en silicone 84 collé entre les bagues extérieure 82 et intérieure 83. L'amortisseur 81 est fretté au sein de l'ouverture d'entraînement 61 par l'intermédiaire de sa bague extérieure 82. La bague intérieure 83 comporte quant à elle sur sa face avant une collerette 85 s'étendant radialement. Une vis d'entraînement 86 est engagée au sein de la bague intérieure 83 et fixée dans le porte-satellites 35 de manière à plaquer la collerette radiale 85 de la bague intérieure 83 contre la surface du porte-satellites 35.

Grâce à ce dispositif d'entraînement en rotation 80, la rotation du porte-satellites 35 entraîne la rotation du système de distribution d'huile 50. Toutefois, les déplacements axiaux ou radiaux du réducteur 3 sont amortis par le corps intermédiaire souple 84 de l'amortisseur 81 et ne sont donc pas transmis au système de distribution d'huile 50 : à l'exception de son mouvement de rotation, la position du système de distribution d'huile 50 par rapport au carter 40 n'est donc pas modifiée. En outre, grâce à la pluralité de dispositifs d'entraînement en rotation 80 répartis autour du système de distribution d'huile 50, les désaxements du réducteur 3 ne sont pas non plus transmis au système de distribution d'huile 50.

Les FIG 5, 6A et 6B illustrent un deuxième exemple de système de distribution d'huile 150 tout à fait analogue à celui du premier exemple mais équipé d'un dispositif d'entraînement en rotation 180 différent.

Dans cet exemple, le système de distribution d'huile 150 comprend également des brides entraînement 160, chaque bride d'entraînement 160 étant percée d'une ouverture d'entraînement 161 ; toutefois, dans cet exemple, l'ouverture d'entraînement 161 n'est pas circulaire mais oblongue, ses côtés latéraux comportant chacun une portion rectiligne 162.

Le dispositif d'entraînement 180 comprend une entretoise 187 possédant des méplats latéraux 188, configurés pour coopérer avec les portions rectilignes 162 de l'orifice d'entraînement 161, et une collerette radiale arrière 189 configurée pour coopérer avec la surface arrière de la bride d'entraînement 160.

L'entretoise 187 comprend en outre un alésage central 190 dans lequel s'engage une vis d'entraînement 186 fixée dans le porte-satellites 135. Un joint torique 191, faisant office d'amortisseur, est en outre disposé entre la vis d'entraînement 186 et l'alésage 190 de l'entretoise 187.

Ce dispositif d'entraînement en rotation 180 est configuré de manière à laisser certains jeux entre ces différentes pièces. Ainsi, comme cela est représenté sur la FIG 6B, lorsque la collerette radiale 189 de l'entretoise 187 est plaquée contre l'épaulement 186a de la vis d'entraînement 186 et que la bride d'entraînement 160 est plaquée contre le porte-satellites 135, un premier jeu J1 d'environ 0,2 mm est laissé entre la face avant de l'entretoise 187 et la surface du porte-satellites 135 ; de plus, un deuxième jeu J2 d'environ 1 mm est laissé entre la collerette radiale 189 de l'entretoise 187 et la surface arrière de la bride entraînement 160.

Comme cela est représenté sur la FIG 6A, un troisième jeu J3 d'environ 0,4 mm est laissé entre la vis d'entraînement 186 et l'alésage central 190 de l'entretoise 187 : ce troisième jeu J3 est comblé par le joint torique 191. Un quatrième jeu J4 d'environ 0,12 mm est laissé entre les méplats 188 de l'entretoise 187 et les portions rectilignes 162 de l'ouverture d'entraînement 161. Enfin, l'entretoise 187 est libre de se déplacer radialement le long de l'ouverture d'entraînement oblongue 161 sur une longueur J5 d'environ 0,5 mm en fonction des dispersions de fonctionnement du réducteur.

Ainsi, grâce à ce dispositif d'entraînement en rotation 180, la rotation du porte-satellites 135 entraîne la rotation du système de distribution d'huile 150. Toutefois, grâce à ces jeux J1 à J5 ainsi qu'à l'amortisseur 191, les déplacements axiaux ou radiaux du réducteur 3 ne sont pas transmis au système de distribution d'huile 150. En outre, grâce à la pluralité de dispositifs d'entraînement en rotation 180 répartis autour du système de distribution d'huile 150, les désaxements du réducteur 3 ne sont pas non plus transmis au système de distribution d'huile 150.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Ensemble rotatif comprenant un organe de transmission (3) et un système de distribution d'huile (50), dans lequel
le système de distribution d'huile (50) comprend au moins une chambre de transfert d'huile (52) munie d'au moins un orifice d'alimentation (54) configuré pour recevoir de l'huile depuis l'extérieur de l'ensemble rotatif,
l'organe de transmission (3) comprend au moins une partie tournante (35) munie d'au moins une chambre de réception d'huile (37),
au moins un conduit de liaison (70) connecte fluidiquement la chambre de transfert d'huile (52) et la chambre de réception d'huile (37),
**caractérisé en ce que** le système de distribution d'huile (50) est entrainé solidairement en rotation par ladite partie tournante (35) de l'organe de transmission (3), et
**en ce que** l'ensemble rotatif est configuré de manière à permettre un déplacement relatif axial et/ou radial donné entre ladite partie tournante (35) de l'organe de transmission (3) et le système de distribution d'huile (50).

2. Ensemble selon la revendication 1, dans lequel le système de distribution d'huile (50) est configuré pour être calé radialement dans un carter (40), et dans lequel l'organe de transmission (3) est monté flottant dans ce carter (40), l'ensemble étant configuré de manière à ce que le système de distribution d'huile (50) conserve sensiblement son alignement dans le carter (40) quels que soient les déplacements axiaux et/ou radiaux de l'organe de transmission (3).

3. Ensemble selon la revendication 1 ou 2, dans lequel le conduit de liaison (70) est monté flottant entre, d'une part, des surfaces de contact (58) du système de distribution d'huile (50) et, d'autre part, des surfaces de contact (38) de la partie tournante (35) de l'organe de transmission (3), des joints toriques (71, 72) s'interposant de préférence entre le conduit de liaison (70) et lesdites surfaces (58, 38) de contact du système de distribution d'huile (50) et de la partie tournante (35) de l'organe de transmission (3).

4. Ensemble selon l'une quelconque des revendications 1 à 3, dans lequel le système de distribution d'huile (50) est connecté à la partie tournante (35) de l'organe de transmission (3) à l'aide d'au moins un dispositif d'entraînement en rotation (80) comprenant un amortisseur (81).

5. Ensemble selon la revendication 4, dans lequel le dispositif d'entraînement en rotation (80) comprend une protrusion d'entraînement (86) solidaire d'une paroi de l'un (35) des deux éléments constitués par la partie tournante de l'organe de transmission et le système de distribution d'huile, ladite protrusion (86) étant engagée dans une ouverture d'entraînement (61) d'une paroi (60) de l'autre (50) desdits éléments, et
dans lequel un amortisseur (81) est interposé entre ladite protrusion d'entraînement (86) et ladite ouverture d'entraînement (61).

6. Ensemble selon la revendication 5, dans lequel l'amortisseur (81) comprend une bague intérieure métallique (83), en contact avec la protrusion d'entraînement (86), une bague extérieure métallique (82), montée dans ladite ouverture d'entraînement (61), et un corps intermédiaire (84) souple axialement et radialement.

7. Ensemble selon la revendication 4, dans lequel le dispositif d'entraînement en rotation (180) comprend une protrusion d'entraînement (186) solidaire d'une paroi de l'un (35) des deux éléments constitués par la partie tournante de l'organe de transmission et le système de distribution d'huile, et une entretoise (187) prévue autour de la protrusion d'entraînement (186), ladite entretoise (187) étant engagée dans une ouverture d'entraînement (161) d'une paroi (160) de l'autre (150) desdits éléments,
et dans lequel un amortisseur (191) est prévu entre ladite protrusion d'entraînement (186) et l'entretoise (187), cet amortisseur (191) étant de préférence un joint torique.

8. Ensemble selon la revendication 7, dans lequel l'ouverture d'entraînement (161) est une ouverture oblongue dont les côtés comportent une portion rectiligne (162), et dans lequel l'entretoise (187) comprend des méplats (188) configurés pour coopérer avec les portions rectilignes (162) de l'ouverture d'entraînement (161), l'entretoise (187) pouvant se déplacer axialement et radialement au sein de l'ouverture d'entraînement (161).

9. Ensemble selon l'une quelconque des revendications 1 à 8, dans lequel la chambre de transfert d'huile (52) du système de distribution d'huile (50) s'étend sur un secteur angulaire strictement inférieur à 360°.

10. Ensemble selon l'une quelconque des revendications 1 à 9, dans lequel l'organe de transmission est un réducteur de vitesse (3) du type train épicycloïdal, dans lequel ladite partie tournante de l'organe de transmission est un porte-satellites (35), et dans lequel ledit porte-satellites (35) possède une pluralité de fusées (34) portant chacune un pignon satellite (33), chaque fusée (34) étant munie d'une chambre de réception d'huile (37) configurée pour lubrifier le palier (36) de ce pignon satellite et chaque chambre de réception d'huile (37) étant connecté fluidiquement à la chambre de transfert d'huile (52) du système de distribution d'huile (50) par un conduit de liaison (70).

11. Ensemble réducteur, comprenant un ensemble rotatif (3, 50) selon l'une quelconque des revendications précédentes, le système de distribution d'huile (50) de cet ensemble étant logé dans un carter (40) muni d'une chambre d'alimentation en huile (41),
dans lequel le carter (40) comprend une cavité annulaire de sortie d'huile (43) ouverte à 360° en direction du système de distribution d'huile (50) et connectée fluidiquement à la chambre d'alimentation en huile (41), et
dans lequel le système de distribution d'huile (50) comprend une cavité annulaire d'entrée d'huile (53) ouverte à 360° en vis-à-vis de la cavité de sortie d'huile (43) du carter (40) et connectée fluidiquement à la cavité annulaire de sortie d'huile (43) et, par l'intermédiaire dudit au moins un orifice d'alimentation (54), à la chambre de transfert d'huile (52).

12. Turbomachine comprenant un ensemble rotatif selon l'une quelconque des revendications 1 à 10 ou un ensemble réducteur selon la revendication 11.

## Patentansprüche

1. Rotorbaugruppe mit einem Getriebeelement (3) und einem Ölverteilsystem (50), wobei
das Ölverteilsystem (50) mindestens eine Öltransferkammer (52) mit mindestens einer Zulauföffnung (54), die dazu ausgelegt ist, Öl von außerhalb der Rotorbaugruppe aufzunehmen, aufweist,
das Getriebeelement (3) mindestens einen Drehteil (35) aufweist, der mit mindestens einer Ölaufnahmekammer (37) versehen ist,
mindestens eine Verbindungsleitung (70) die Öltransferkammer (52) und die Ölaufnahmekammer (37) fluidisch verbindet,
**dadurch gekennzeichnet, dass** das Ölverteilsystem (50) durch den Drehteil (35) des Getriebeelements (3) drehfest angetrieben wird, und
dass die Rotorbaugruppe so konfiguriert ist, dass sie eine gegebene axiale und/oder radiale relative Bewegung zwischen dem Drehteil (35) des Getriebeelements (3) und dem Ölverteilsystem (50) zulässt.

2. Baugruppe nach Anspruch 1, wobei das Ölverteilsystem (50) dazu ausgelegt ist, radial in einem Gehäuse (40) eingeklemmt zu werden, und wobei das Getriebeelement (3) in diesem Gehäuse (40) schwimmend gelagert ist, wobei die Baugruppe so konfiguriert ist, dass das Ölverteilsystem (50) unabhängig von den axialen und/oder radialen Bewegungen des Getriebeelements (3) im Wesentlichen im Gehäuse (40) ausgerichtet bleibt.

3. Baugruppe nach Anspruch 1 oder 2, wobei die Verbindungsleitung (70) zwischen einerseits Kontaktflächen (58) des Ölverteilsystems (50) und andererseits Kontaktflächen (38) des Drehteils (35) des Getriebeelements (3) schwimmend gelagert ist, wobei O-Ringe (71, 72) vorzugsweise zwischen der Verbindungsleitung (70) und den Kontaktflächen (58, 38) des Ölverteilungssystems (50) und des Drehteils (35) des Getriebeelements (3) angeordnet sind.

4. Baugruppe nach einem der Ansprüche 1 bis 3, wobei das Ölverteilsystem (50) mit dem Drehteil (35) des Getriebeelements (3) mittels mindestens einer einen Dämpfer (81) umfassenden Drehantriebsvorrichtung (80) verbunden ist.

5. Baugruppe nach Anspruch 4, wobei die Drehantriebsvorrichtung (80) einen Antriebsvorsprung (86) aufweist, der mit einer Wandung eines (35) der beiden Elemente, Drehteil des Getriebeelements und Ölverteilsystem, verbunden ist, und der Vorsprung (86) in eine Antriebsöffnung (61) einer Wandung (60) des anderen (50) dieser Elemente eingreift, und
wobei ein Dämpfer (81) zwischen dem Antriebsvorsprung (86) und der Antriebsöffnung (61) angeordnet ist.

6. Baugruppe nach Anspruch 5, wobei der Dämpfer (81) einen Metall-Innenring (83), der mit dem Antriebsvorsprung (86) in Kontakt steht, einen Metall-Außenring (82), der in der Antriebsöffnung (61) befestigt ist, und einen axial und radial flexiblen Zwischenkörper (84) aufweist.

7. Baugruppe nach Anspruch 4, wobei die Drehantriebsvorrichtung (180) einen Antriebsvorsprung (186), der mit einer Wandung eines (35) der beiden Elemente, Drehteil des Getriebeelements und Ölverteilsystem, verbunden ist, und einen Abstandshalter (187) aufweist, der um den Antriebsvorsprung (186) herum vorgesehen ist, wobei der Abstandshalter (187) in eine Antriebsöffnung (161) einer Wandung (160) des anderen (150) dieser Elemente eingreift, und
wobei ein Dämpfer (191) zwischen dem Antriebsvorsprung (186) und dem Abstandshalter (187) vorgesehen ist, wobei der Dämpfer (191) vorzugsweise ein O-Ring ist.

8. Baugruppe nach Anspruch 7, wobei die Antriebsöffnung (161) eine längliche Öffnung ist, deren Seiten einen geraden Abschnitt (162) aufweisen, und wobei der Abstandshalter (187) Abflachungen (188) umfasst, die so konfiguriert sind, dass sie mit den geradlinigen Abschnitten (162) der Antriebsöffnung (161) zusammenwirken, wobei der Abstandshalter (187) sich axial und radial innerhalb der Antriebsöffnung (161) bewegen kann.

9. Baugruppe nach einem der Ansprüche 1 bis 8, wobei sich die Öltransferkammer (52) des Ölverteilsystems (50) über einen Winkelbereich erstreckt, der strikt kleiner als 360° ist.

10. Baugruppe nach einem der Ansprüche 1 bis 9, wobei das Getriebeelement ein Untersetzungsgetriebe (3) des Typs Planetengetriebe ist, wobei der Drehteil des Getriebeelements ein Planetenradträger (35) ist, und wobei der Planetenradträger (35) eine Vielzahl von Achsschenkeln (34) aufweist, die jeweils ein Planetenrad (33) tragen, wobei jeder Achsschenkel (34) mit einer Ölaufnahmekammer (37) versehen ist, die dazu ausgelegt ist, das Lager (36) dieses Planetenrads zu schmieren, und wobei jede Ölaufnahmekammer (37) durch eine Verbindungsleitung (70) mit der Öltransferkammer (52) des Ölverteilsystems (50) fluidisch verbunden ist.

11. Untersetzungsgetriebeeinheit, umfassend eine Rotorbaugruppe (3, 50) nach einem der vorangehenden Ansprüche, wobei das Ölverteilsystem (50) dieser Einheit in einem Gehäuse (40) untergebracht ist, das mit einer Ölversorgungskammer (41) versehen ist,
wobei das Gehäuse (40) einen ringförmigen Ölaustrittshohlraum (43) umfasst, der 360° zum Ölverteilsystem (50) hin geöffnet und mit der Ölversorgungskammer (41) fluidisch verbunden ist, und
wobei das Ölverteilsystem (50) einen ringförmigen Öleintrittshohlraum (53) umfasst, der 360° gegenüber dem Ölaustrittshohlraum (43) des Gehäuses (40) geöffnet und fluidisch mit dem ringförmigen Ölaustriftshohlraum (43) und, über die mindestens eine Zulauföffnung (54), mit der Öltransferkammer (52) verbunden ist.

12. Turbomaschine, umfassend eine Rotorbaugruppe nach Anspruch 1 bis 10 oder eine Untersetzungsgetriebeeinheit nach Anspruch 11.

## Claims

1. A rotary assembly comprising a transmission member (3) and an oil distribution system (50), wherein:
the oil distribution system (50) comprises at least one oil transfer chamber (52) provided with at least one feed orifice (54) configured to receive oil from outside the rotary assembly;
the transmission member (3) includes at least one rotary portion (35) provided with at least one oil reception chamber (37);
at least one link duct (70) provides fluid flow connection between the oil transfer chamber (52) and the oil reception chamber (37);
wherein the oil distribution system (50) is driven to rotate together with said rotary portion (35) of the transmission member (3); and
wherein the rotary assembly is configured in such a manner as to accommodate a given amount of axial and/or radial relative movement between said rotary portion (35) of the transmission member (3) and the oil distribution system (50).

2. An assembly according to claim 1, wherein the oil distribution system (50) is configured to be held radially in a casing (40), and wherein the transmission member (3) is floatingly mounted in the casing (40), the assembly being configured in such a manner that the oil distribution system (50) substantially conserves its alignment in the casing (40) regardless of the axial and/or radial movements of the transmission member (3).

3. An assembly according to claim 1 or claim 2, wherein the link duct (70) is floatingly mounted between firstly contact surfaces (58) of the oil distribution system (50), and secondly contact surfaces (38) of the rotary portion (35) of the transmission member (3), O-rings (71, 72) being preferably interposed between the link duct (70) and said contact surfaces (58, 38) of the oil distribution system (50) and the rotary portion (35) of the transmission member (3).

4. An assembly according to any one of claims 1 to 3, wherein the oil distribution system (50) is connected to the rotary portion (35) of the transmission member (3) via at least one rotary drive device (80) including a damper (81).

5. An assembly according to claim 4, wherein the rotary drive device (80) comprises a drive protrusion (86) secured to the wall of one of the two elements (35) constituted by the rotary portion of the transmission member and the oil distribution system, said protrusion (86) being engaged in a drive opening (61) in a wall (60) of the other one of said elements (50), and
wherein a damper (81) is interposed between said drive protrusion (86) and said drive opening (61).

6. An assembly according to claim 5, wherein the damper (81) comprises a metal inner ring (83) in contact with the drive protrusion (86), a metal outer ring (82) mounted in said drive opening (61), and an axially and radially flexible intermediate body (84).

7. An assembly according to claim 4, wherein the rotary drive device (180) comprises a drive protrusion (186) secured to a wall of one of the two elements (35) constituted by the rotary portion of the transmission member and the oil distribution system, and a spacer (187) provided around the drive protrusion (186), said spacer (187) being engaged in a drive opening (161) in a wall (160) of the other one of said elements (150), and
wherein a damper (191) is provided between said drive protrusion (186) and the spacer (187), the damper (191) preferably being an 0-ring.

8. An assembly according to claim 7, wherein the drive opening (161) is an oblong opening having sides including a rectilinear portion (162), and wherein the spacer (187) has flats (188) configured to co-operate with the rectilinear portions (162) of the drive opening (161), the spacer (187) being capable of moving axially and radially within the drive opening (161).

9. An assembly according to any one of claims 1 to 8, wherein the oil transfer chamber (52) of the oil distribution system (50) extends over an angular sector that is strictly less than 360°.

10. An assembly according to any one of claims 1 to 9, wherein the transmission member is a speed reducing gearbox (3) of the epicyclic gear train type, wherein said rotary portion of the transmission member is a planet carrier (35), and wherein said planet carrier (35) possesses a plurality of spindles (34) each carrying a planet gear (33), each spindle (34) being provided with an oil reception chamber (37) configured to lubricate the bearing (36) of said planet carrier, and each oil reception chamber (37) being in fluid flow connection with the oil transfer chamber (52) of the oil distribution system (50) via a respective link duct (70).

11. A gearbox assembly comprising a rotary assembly (3, 50) according to any preceding claim, the oil distribution system (50) of the assembly being received in a casing (40) having an oil feed chamber (41);
wherein the casing (40) includes an annular oil outlet cavity (43) open over 360° towards the oil distribution system (50) and in fluid flow connection with the oil feed chamber (41); and
wherein the oil distribution system (50) comprises an annular oil inlet cavity (53) open over 360° facing the oil outlet cavity (43) of the casing (40) and in fluid flow connection with the annular oil outlet cavity (43), and via said at least one feed orifice (54) with the oil transfer chamber (52).

12. A turbine engine including a rotary assembly according to any one of claims 1 to 10 or a gearbox assembly according to claim 11.
